# EUROPEAN PATENT SPECIFICATION

(11) **EP 0 821 717 B1**
(45) Date of publication and mention of the grant of the patent: **07.07.1999**
(21) Application number: 96910719.2
(22) Date of filing: 03.04.1996
(51) Int. Cl.: C09J 123/08, C08K 5/18

(54) **AMINE CROSS-LINKABLE HOT-MELT ADHESIVE AND ADHESIVE FILM**
KLEBEBAND UND MIT AMINEN VERNETZBARER HEISSSCHMELZKLEBSTOFF
ADHESIF ET FILM ADHESIF THERMOFUSIBLE D'AMINE RETICULABLE

(30) Priority: 21.04.1995 JP 9689195
(43) Date of publication of application: 04.02.1998
(73) Proprietor: MINNESOTA MINING AND MANUFACTURING COMPANY, St. Paul, Minnesota 55133-3427 (US)
(72) Inventor: KAWATE, Kohichiro, Tokyo 194 (JP); ISHII, Shigeyoshi, Kanagawa pref. 229 (JP); KIMURA, Toshio, Kanagawa pref. 229 (JP)
(74) Representative: VOSSIUS & PARTNER
(86) International application number: US9604552
(87) International publication number: WO9633248

(56) References cited:
- US-A- 4 108 819
- DATABASE WPI Derwent Publications Ltd., London, GB; AN 77-71419y XP002007458 & JP 52 100 533 A (SUMITOMO) , 23 August 1977

## Description

### BACKGROUND OF THE INVENTION

### Field of the Invention

The present invention relates to a hot melt adhesive composition, and more particularly, to a hot melt adhesive composition that can be advantageously used for the adhesion of electronic components such as integrated circuit (IC) chips. The present invention also relates to an adhesive film that comprises the hot melt adhesive composition.

### Description of the Related Art

A hot melt adhesive is an adhesive which is solid at room temperature, and has a thermoplastic resin for its main component. This adhesive is generally applied by heating and melting it. Since it demonstrates adhesive strength by a physical change in form (solidification upon cooling), bonds can be made quickly and with excellent productivity. Since the adhesive does not include a volatile solvent, it is safer to use when making adhesive bonds. Therefore, in addition to conventional use in the fields of packing and woodworking, hot melt adhesives have also come to be widely used in electronics applications in recent years.

Polyolefin-based hot melt adhesives in particular are chemically stable. This stability has been proven even in testing under severe conditions such as, for example, the pressure cooker test to which semiconductor products and so forth are subjected. However, polyolefin-based hot melt adhesives have the disadvantage of inferior heat resistance. More specifically, as can be easily understood from their method of use, hot melt adhesives are unable to demonstrate adequate adhesive strength at high temperatures (i.e., temperatures equal to or above the bonding temperature). This low level of heat resistance limits the use of hot melt adhesives in electronics applications. For example, when an adhesive tape is used to fix the lead pins of IC lead frames, the tape is immersed in a solder bath after thermocompression bonding at a temperature on the order of 180°C. However, the assembly is eventually placed in a heated environment of 230-260°C, where its inferior heat resistance prevents it from being used.

Efforts have been made to improve the heat resistance of adhesives. For example, Japanese Examined Patent Publication (Kokoku) No. 6-68100 discloses a resin composition comprising a mixture of acrylonitrile-butadiene copolymer and phenol resin. This resin composition allows thermocompression bonding and is relatively stable with respect to the pressure cooker test. In addition, since it crosslinks upon heating, it has excellent heat resistance. However, since resins of this type cure gradually upon heating, it is difficult to use them in hot melt coating processes where the resins must be heated to a viscous fluid state for application. In actuality, when these resins are used to prepare a film adhesive, the resin is dried after it has been dissolved in a solvent and coated onto a support. In addition to the drying step (which reduces productivity), solvent recovery equipment is required to avoid unnecessary pollution of the environment. Any residual solvent may generate gas from bonded locations during subsequent heating (e.g., soldering), which can cause soldering defects. Moreover, any water produced during curing of the phenol resin also causes soldering defects.

As described above, it is necessary to cross-link previously known adhesive compositions in order to give them heat resistance following bond formation. Since it is difficult to control the cross-linking reaction, the previously known adhesive compositions could not be used as hot melt adhesives having heat resistance.

Therefore, one objective of the present invention is to provide a novel hot melt adhesive composition that allows hot melt coating, and which demonstrates strong adhesion as well as heat resistance without the need for thermal cross-linking once the adhesive has been applied. Another objective of the present invention is to provide an adhesive film formed from such a hot melt adhesive composition and which has heat resistance.

### SUMMARY OF THE INVENTION

According to the present invention, the first objective can be achieved with a hot melt adhesive composition that comprises:
(a) a thermoplastic resin comprising a polyolefin having an epoxy group in its molecule; and
(b) an aromatic amine represented by the formula (I) below: 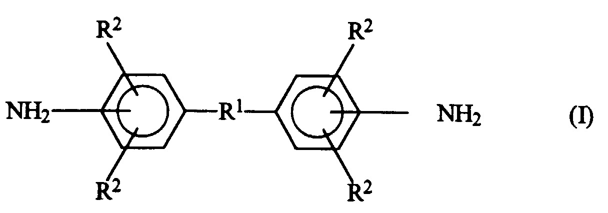 wherein, R¹ is 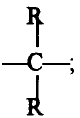 -SO₂- or a bivalent fluorene group of the formula (II) below: 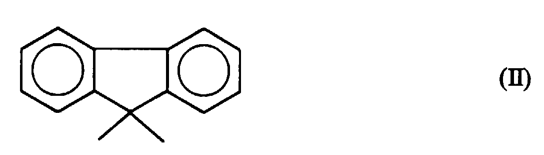 wherein, each R may be the same or may be different, and is selected from the group consisting of hydrogen, alkyl groups having 1-3 carbon atoms, halogen-substituted alkyl groups having 1-3 carbon atoms, and cyclohexyl groups; and wherein each R² may be the same or may be different, and is selected from the group consisting of hydrogen, halogen, and alkyl groups having 1-3 carbon atoms.

The second objective of this invention can be achieved by providing an adhesive layer formed from a hot melt adhesive composition like that described above on a suitable support or backing for an adhesive film.

Advantageously, hot melt adhesive compositions of the present invention, when heated to a temperature that is lower than a prescribed temperature, melt without crosslinking. This allows for hot melt coating of the adhesive composition. The adhesives demonstrate strong adhesion and good heat resistance. The adhesive demonstrates even stronger adhesion and heat resistance as a result of a crosslinking reaction that takes place only at a temperature that is equal to or above the prescribed temperature.

### DETAILED DESCRIPTION OF THE PREFERRED EMBODIMENTS

Hot melt adhesive compositions according to the present invention comprise, as the main component, a thermoplastic resin comprising polyolefin having an epoxy group in its molecule. Thermoplastic resins that can be advantageously used in the present invention are those which contain polyolefin as described above, and whose melt flow rate (MFR) is within the range of 1-500 g/10 minutes when measured at a temperature of 190°C in accordance with the provisions of JIS K6760. If the MFR of the thermoplastic resin is less than 1 g/10 minutes, hot melt coating may be difficult. Conversely, if the MFR exceeds 500 g/10 minutes, the cohesive strength of the adhesive may be insufficient and the adhesive strength tends to decrease. The MFR of the thermoplastic resin is more preferably within the range of 2-400 g/10 minutes.

The preferred polyolefins are copolymers derived by using an olefin monomer and a glycidyl group-containing monomer as the starting monomers. Such polyolefins are preferably copolymers derived by using at least glycidyl(meth)acrylate (G) and ethylene (E) as the starting monomers. As used herein, a "copolymer" includes those having two components, three components, or another number of components (i.e., derived from two or more monomers). Although there are no particular limitations on the amount of monomer components (G) and (E) in the polyolefin, they preferably provide at least 50% by weight, and more preferably at least 75% by weight, with respect to the total weight of the polyolefin. In addition, the ratio of monomer components (G) and (E) in the polyolefin is, in terms of their weight ratio, preferably 40:60-1:99, and more preferably, 20:80-5:95. Monomer components (G) and (E) are particularly preferred starting monomers for the polyolefin, as this enables the resulting polyolefin to melt at relatively low temperatures (as compared to the aromatic amine which also used in the adhesive composition). This facilitates hot melt coating of the adhesive composition and improves thermal adhesion.

In preparing the polyolefin, other starting monomers that can be used with the glycidyl(meth)acrylate (G) and ethylene (E) include various (meth)acrylates, vinyl acetates, acrylates and maleates.

The polyolefin may have any weight average molecular weight provided it yields the desired MFR for the thermoplastic resin, as described above. However, it is preferred that the weight average molecular weight of the polyolefin be 200,000 or less.

Examples of polyolefins that can be advantageously used in carrying out the present invention include copolymers of glycidyl(meth)acrylate and ethylene, copolymers of glycidyl(meth)acrylate, ethylene and vinyl acetate, and copolymers of glycidyl(meth)acrylate, ethylene and various (meth)acrylates.

In addition to the above-mentioned thermoplastic resin, the hot melt adhesive composition according to the present invention requires the use of an aromatic amine according to the above-mentioned formula (I). The aromatic amine used here refers to a compound that enables crosslinking of the previously described polyolefin having the epoxy group. The reaction rate of the aromatic amine with the polyolefin is slow at temperatures below the melting point of the aromatic amine due to steric hindrance caused by the aromatic ring. Thus, the adhesive compositions of the present invention can be stored stably at temperatures below the melting point of the aromatic amine. In addition, when hot melt coating at these temperatures, there is, quite advantageously, hardly any crosslinking of the polyolefin.

The aromatic amine is represented by the above-mentioned formula (I) , and R¹ and R² in the formula are as previously described. Preferably, R¹ in the formula is -C(R)₂-, -SO₂-, or a bivalent fluorene group of the above-mentioned formula (II). R is preferably and independently H, CH₃, CF₃ or a cyclohexyl group, while R² is preferably and independently, H, Cl, CH₃, C₂H₅ or C₃H₇.

Although preferable examples of aromatic amines represented by the above-mentioned formula (I) are not limited to those indicated below, specific examples include diaminodiphenyl sulfone and its derivatives, diaminodiphenyl methane and its derivatives and diaminodiphenyl fluorene and its derivatives such as 4,4'-diaminodiphenyl methane, 3,3'-dichloro-4,4'-diaminodiphenyl methane, 3,3'-dimethyl-4,4'-diamino-5,5'-diethyldiphenyl methane, 4,4'-diaminodiphenyl sulfone, 3,3'-dichloro4,4'-diaminodiphenyl sulfone, 3,3'-dimethyl-4,4'-diamino-5,5'-diethyldiphenyl sulfone, 9,9'-bis(4-aminophenyl) fluorene, 9,9'-bis(3-chloro-4-aminophenyl) fluorene, 9,9'-bis(3-methyl-4-aminophenyl) fluorene and 9,9'-bis(3-ethyl-4-aminophenyl) fluorene. In addition, blends of different compounds may be used.

The aromatic amine used in the practice of the present invention is most preferably a fluorene amine in which R¹ in the above-mentioned formula (I) is a fluorene group. Since fluorene amines are thermally stable and have a relatively high melting point, they hardly react at all with the epoxy-functional polyolefin at temperatures below their melting point. However, they do react with polyolefin when melted, thereby enabling cross-linking to be easily introduced. Fluorene amines also react favorably with epoxy resins. Examples of useful fluorene amines are listed above.

The aromatic amine is preferably used in a range of 0.5-100 parts by weight per 100 parts by weight of the thermoplastic resin, more preferably 5-50 parts by weight. If the aromatic amine content is less than 5 parts by weight, the improvement in heat resistance by crosslinking may be inadequate. Conversely, if the amine content exceeds 100 parts by weight, then the crosslinking density becomes quite high, which may result in decreased thermal adhesion.

The melting point of the aromatic amine is preferably higher than the melting point of the polyolefin. This facilitates hot melt coating because the adhesive composition can be melted without crosslinking if heated to a temperature below the melting point of the aromatic amine but greater than or equal to the melting point of the polyolefin.

The hot melt adhesive compositions of the present invention may also contain an epoxy resin. The epoxy resin can improve the heat resistance of the adhesive composition. Examples of epoxy resins that can be used in the adhesive compositions of the present invention include bisphenol A epoxy resin, bisphenol F epoxy resin, phenol novolak epoxy resin, cresol novolak epoxy resin, fluorene epoxy resin, glycidyl amine resin, and aliphatic epoxy resin. The epoxy resins can be used as mixtures of more than one type.

When an epoxy resin is combined with a thermoplastic resin and aromatic amine, the aromatic amine can also crosslink the epoxy resin. When the adhesive composition is prepared by kneading, by heating the aromatic amine and the epoxy resin to a temperature equal to or higher than their reaction temperature, the reaction product of the aromatic amine and epoxy resin is formed. This reaction product can be dispersed and contained in the adhesive composition. The formation of this "islands-in the-sea structure" of dispersed compound is particularly important and effective, because it can provide improved adhesion to various articles (e.g., metallic articles), and also can avoid reduced adhesion, that may occur when the polyolefin is subsequently crosslinked (e.g., by electron beam irradiation or any other means) to provide increased heat resistance.

The epoxy resin can be used in any amount in the adhesive composition. However, the amount of epoxy resin used is preferably within the range of 5-200 parts by weight, and more preferably within the range of 10-100 parts by weight, per 100 parts by weight of the thermoplastic resin. If the epoxy resin content is less than 5 parts by weight, then the improvement in heat resistance may not be obtained. If the epoxy resin content exceeds 200 parts by weight, thermal adhesion tends to decrease.

The adhesive composition of the present invention may contain a silane coupling agent in order to increase its adhesive strength. Examples of silane coupling agents include gamma-mercaptopropyltrimethoxy silane, N-phenyl-gamma-aminopropyltrimethoxy silane, N-beta(aminoethyl)-gamma-aminopropylmethyldimethoxy silane, N-beta(aminoethyl)-gamma-aminopropyltrimethoxy silane, N-beta(aminoethyl)-gamma-aminopropyltriethoxy silane, gamma-aminopropyltrimethoxy silane, gamma-aminopropyltriethoxy silane and gamma-glycidoxypropyltrimethoxy silane.

The adhesive composition of the present invention may further contain any conventional additives including anti-oxidants, UV light absorbers, fillers, tackifiers, lubricants, rubber components, and the like.

The adhesive compositions of the present invention can be prepared in accordance with conventional methods using commercially available equipment by combining and kneading the components in the desired amounts. The order in which components are added during kneading is not important. The components may be kneaded together or added individually. For those compositions that include an epoxy resin, it is preferable to first knead the aromatic amine and epoxy resin, and then add the remaining components and knead as previously described.

The hot melt adhesive compositions of the present invention can be advantageously used in the formation of adhesive films. As previously described, the adhesive films of the present invention comprise a support and a layer of the hot melt adhesive composition disposed on one side or both sides of the support so as to provide either an (elongated) adhesive-coated tape or an adhesive coated sheet. The thickness of the adhesive film is arbitrary, and can be changed as desired depending on the thickness of the support being used and so forth.

The support preferably comprises a heat resistant material. Various types of plastics can be used as the support, examples of which include polyimide, polyether ether ketone, polyether imide, polyether sulfone, polyphenylene sulfide, polyethylene terephthalate and polyethylene naphthalate. Paper and metal supports may also be used instead of plastic. Although the thickness of the support can vary over a wide range according to the application of the adhesive film, it is typically about 0.01 to 1 mm.

In applying the adhesive composition on a substrate, conventional hot melt coating methods can be used advantageously. A preferred method involves hot melt coating the adhesive composition of the present invention onto one side or both sides of a heat-resistant substrate. However, the film may be thermocompression bonded with the substrate after preparing a film of the adhesive composition by melt extrusion methods such as by the T-die method, inflation method, calender method and so on. Although there are no particular limitations on the thickness of the adhesive layer, typically it is about 0.005 to 1 mm.

In addition, the adhesive film can be subsequently crosslinked by irradiation to improve the heat resistance. Any suitable radiation can be selected depending on the adhesive composition although those which are particularly preferred include electron beam, ultraviolet rays, and others. For example, the heat resistance of the adhesive film of the present invention can be further increased by partially crosslinking the adhesive with electron beam radiation after hot melt coating.

The crosslinking reaction is an important aspect of the present invention. More specifically, the crosslinking reaction between the epoxy-functional polyolefin and the aromatic amine results from heating the adhesive composition or the film to a temperature equal to or higher than a prescribed temperature, or after applying the adhesive film to an adherend. When the adhesive composition is heated to a temperature that is lower than the melting point of the aromatic amine, the adhesive can be hot melt coated without crosslinking occurring. When the adhesive composition is then heated to a temperature equal to or higher than the melting point of the aromatic amine, crosslinking takes place between the aromatic amine and the polyolefin. As a result, high adhesive strength and heat resistance are obtained. The crosslinking reaction can be easily controlled by controlling the heating temperature.

Similarly, the crosslinking reaction between the epoxy resin and aromatic amine can also be brought about by heating the adhesive composition to a temperature equal to or higher than a threshold temperature after hot melt coating the adhesive.

Alternatively, if the adhesive composition contains the thermoplastic polyolefin resin, the epoxy resin, and the aromatic amine, it can be initially heated at a temperature that is equal to or higher than the reaction temperature of the epoxy resin and the aromatic amine to first form an epoxy resin/aromatic amine reaction product. The reaction product is crosslinked. In addition, based on the compatibility of the three compounds, the resulting composition separates into a phase containing the epoxy functional polyolefin thermoplastic resin, and a phase that contains the epoxy/aromatic amine reaction product. When the composition is heated to a temperature equal to or higher than the melting point of the above-mentioned thermoplastic resin, it becomes sufficiently fluid that it can be hot melt coated. Accordingly, it can be used as an adhesive having satisfactory heat resistance. Further, although the adhesive composition can be first coated and then the polyolefin crosslinked to improve the heat resistance of the resulting coating, the adhesion properties of the coating are substantially retained because of the epoxy/aromatic amine reaction product. Compositions such as these are preferred because thermal crosslinking after the adhesive has been applied to the adherend is not necessary, thereby eliminating the steps of heating and cooling the adhered object.

Although the following provides an explanation of particular embodiments of the present invention, the present invention is not limited by these embodiments. The melt flow rates (MFR) of the thermoplastic resins described in the following embodiments were obtained by measuring at a temperature of 190°C in accordance with the provisions of JIS K6760. Measuring conditions are as follows:

The thermoplastic resin is placed in the prescribed tester followed by melting and adding a load to the piston to extrude the thermoplastic resin from the orifice. The heating temperature is 190°C and the applied load is 2160±10 g. The amount that flows out in 10 minutes (units: g) is the melt flow rate.

### Example 1

### Preparation of Hot Melt Adhesive Composition (A)

10 parts by weight of 9,9'-bis(3-methyl-4-aminophenyl) fluorene (3M, "OTBAF", melting point: 230°C) were added to 100 parts by weight of glycidylmethacrylate/ethylene/vinyl acetate copolymer (weight ratio: 12/83/5, MFR = 20 g/10 minutes, Sumitomo Chemical, "Bondfast 20B", melting point: approx. 100°C) followed by kneading at 160°C to prepare adhesive composition (A). Changes in the shear elastic modulus of the resulting adhesive composition (A) at various temperatures were measured using a dynamic viscoelasticity measuring device (RDA, Rheometrics). Measuring conditions were as follows:
Standing times (min): 0, 20, 40 and 60
Heat treatment/measuring temperature:
   - Measurement 1: No heat treatment, measuring temperature: 160°C
   - Measurement 2: Heat treatment (standing for 5 minutes in an oven at 230°C), measuring temperature: 160°C
   - Measurement 3: No heat treatment, measuring temperature: 230°C

The measurement results obtained as described above are shown in Table 1 below.

**Table 1**

| **Changes in Shear Elastic Modulus According to Standing Time** | | | |
|---|---|---|---|
| | Elastic Modulus (dynes/cm²) | | |
| Standing Time (min) | Measurement 1 | Measurement 2 | Measurement 3 |
| 0 | 4.9 x 10⁴ | 4.6 x 10⁴ | 6.7 x 10³ |
| 20 | 4.9 x 10⁴ | 5.9 x 10⁴ | 5.5 x 10⁵ |
| 40 | 5.0 x 10⁴ | 8.2 x 10⁴ | 1.0 x 10⁷ |
| 60 | 5.0 x 10⁴ | 1.1 x 10⁵ | 3.0 x 10⁸ |

As is clear from the results described in Table 1 above, the elastic modulus of the adhesive composition remains nearly constant at 160°C and there is no occurrence of crosslinking. When thermal analysis was performed on this composition using a differential scanning calorimeter (DSC, Perkin-Elmer) for a rate of temperature rise of 20°C/min, latent heat was observed at which crystals of fluorene amine (OTBAF) melted at 220-230°C. (The fluorene amine melts at 230°C.) Next, when the sample for which the elastic modulus was measured at 160°C was heat treated for 5 minutes at 230°C followed again by measurement of the changes over time in the elastic modulus at 160°C, it was clear that the elastic modulus increased with time, thus indicating that a crosslinking reaction was occurring. Namely, the composition following melting of fluorene amine crystals demonstrates thermal crosslinking at 160°C as well. In addition, in the case of allowing the adhesive composition to stand at 230°C, a rapid increase in elastic modulus was observed.

### Example 2

### Measurement of Adhesive Strength

The hot melt adhesive composition prepared in Example 1 was hot melt coated on a polyimide film support having a thickness of 100 µm at a temperature of 160°C to provide an adhesive layer having a thickness of 50 µm. Next, an adhesive film was prepared by heat treating this adhesive layer for 14 minutes at 230°C.

The adhesive film obtained in the manner described above was adhered to copper foil having a thickness of 35 µm by compression bonding for 10 seconds at a pressure of 10 kgf/cm² and at compression bonding temperatures of 120°C, 140°C, 180°C, 220°C or 260°C using a press. Using the resulting products as samples, the peel adhesion of each sample was measured at room temperature. Moreover, heat treatment was performed for 1 hour at 200°C on each of the compression bonded samples at each of the above-mentioned temperatures, after which the peel adhesion was again measured after allowing the samples to cool to room temperature. The measuring conditions applied in this example consisted of a peeling rate of 50 mm/min and a peeling angle of 90 degrees. The results obtained are shown in Table 2 below.

**Table 2**

| **Peel Adhesion at Room Temperature** | | |
|---|---|---|
| | Peel Adhesion (g/cm) | |
| Compression Bonding Temperature (°C) | Immediately After Compression Bonding | After Heat Treatment for 1 Hour at 200°C |
| 120 | 20 | 1900 |
| 140 | 50 | 2600 |
| 180 | 600 | 2400 |
| 220 | 2000 | 2400 |
| 260 | 2000 | 2800 |

As is clear from the results described in Table 2, the peel adhesion of the adhesive film can be increased by heat treatment.

### Example 3

### Evaluation of Heat Resistance (Shear Deformation Rate with respect to Shear Stress)

Using the product obtained by affixing the adhesive film prepared in Example 2 onto a copper plate at a compression bonding temperature of 180°C, the shear deformation rate with respect to shear stress was measured (measuring temperature: 180°C).

In addition, a comparative sample was prepared in the same manner as Example 2 with the exception of using only the thermoplastic resin "Bondfast 20B" in place of the adhesive composition. Shear deformation rate with respect to shear stress was then measured in the same manner as described above for this comparative sample.

The results obtained are shown in Table 3 below.

**Table 3**

| **Shear Deformation Rate with respect to Shear Stress** | | |
|---|---|---|
| Evaluated Parameter | Sample of the Present Invention | Comparative Sample |
| Shear Stress (N/cm²) | 2.5 | 0.25 |
| Shear Deformation Rate (cm/min) | 0.0 | 4.0 |

As is clear from the results described in Table 3 above, crosslinking occurs in compositions to which fluorene amine has been added (sample of the present invention) resulting in the demonstration of extremely high holding power.

### Example 4

### Preparation of Hot Melt Adhesive Composition (B)

The procedure described in Example 1 was repeated. However, instead of using "Bondfast 20B" for the thermoplastic resin, glycidylmethacrylate/ethylene copolymer (weight ratio: 18/82, MFR = 350 g/10 minutes, Sumitomo Chemical, "Bondfast CG-5001, melting point = approx. 100°C) was used in this example. Measurement of shear elastic modulus was performed for measurements 1 and 3 of Example 1 at standing times of 0, 10, 20 and 30 minutes. The results obtained are shown in Table 4 below.

**Table 4**

| **Changes in Shear Elastic Modulus According to Standing Time** | | |
|---|---|---|
| | Elastic Modulus (dynes/cm²) | |
| Standing Time (min) | Measurement 1 | Measurement 3 |
| 0 | 5.3 x 10⁴ | 33 |
| 10 | 5.3 x 10⁴ | 2.2 x 10⁴ |
| 20 | 5.3 x 10⁴ | 1.3 x 10⁶ |
| 30 | 5.3 x 10⁴ | 2.8 x 10⁷ |

Based on the results described in Table 4, similar to the above-mentioned results described in Example 1, it is clear that:
(1) a crosslinking reaction does not occur at 160°C, and
(2) a crosslinking reaction does occur at 230°C.

### Example 5

### Preparation of Hot Melt Adhesive Composition (C) Containing Epoxy Resin

The following three components were mixed:
- Thermoplastic resin:: "Bondfast 20B" (used in Example 1) - 80 parts by weight
- Epoxy resin:: "EPON 1010" (Yuka Shell Epoxy, bisphenol A epoxy resin, epoxy equivalent weight: 3,000) - 18 parts by weight
- Aromatic amine:: 9,9'-bis(3-chloro-4-aminophenyl)fluorene "CAF" (melting point: 197°C) - 2 parts by weight

The resulting mixture was kneaded for 1 hour at a temperature of 180-190°C corresponding to the reaction temperature of the EPON 1001 and CAF to prepare adhesive composition (C). Next, after the resulting adhesive composition (C) was hot melt coated onto a polyimide film support having a thickness of 50 µm to provide an adhesive layer having a thickness of 80 µm, the adhesive layer was irradiated with an electron beam having a dosage of 50 kGy at an applied voltage of 300 kV to crosslink the adhesive layer, thereby obtaining an adhesive film.

Next, the resulting adhesive film was adhered to copper foil having a thickness of 35 µm under conditions of a compression bonding temperature of 180°C, pressure of 10 kgf/cm², and compression bonding time of 10 seconds. The peel adhesion of the resulting sample was measured in accordance with the procedure described in Example 2 at each of the measurement temperatures indicated in Table 5 below. The measurement conditions used in this example consisted of a peel rate of 50 mm/min and peel angle of 90 degrees.

### Comparative Examples 1-3

The procedure described in Example 5 was repeated. However, for the sake of comparison, previously known hot melt adhesives, as shown below, were used instead of adhesive composition (C).
- Comparative Example 1:: "Bondfast 20B" (used in Example 1)
- Comparative Example 2:: "Bondine TX8030" (ethylene/ethyl acrylate/maleate copolymer obtainable from Sumitomo Atochem)
- Comparative Example 3:: "Bondine LX4110" (ethylene/ethyl acrylate/maleate copolymer obtainable from Sumitomo Atochem)

The results obtained are shown in Table 5 below.

**Table 5**

| **Peel Adhesion (g/cm)** | | | | |
|---|---|---|---|---|
| | Peel Adhesion (g/cm) | | | |
| Example | 25°C | 180°C | 220°C | 260°C |
| Example 5 | 1,200 | 250 | 300 | 250 |
| Comp. Ex. 1 | 1,000 | 50 | 50 | - |
| Comp. Ex. 2 | 1,700 | 150 | 100 | 50 |
| Comp. Ex. 3 | 1,200 | 120 | 80 | 80 |

As is clear from the results described in Table 5, the adhesive films of the present invention enable sufficiently high adhesive strength to be maintained even at temperatures equal to or higher than the adhesion temperature.

The adhesive compositions and the adhesive films of the invention demonstrate excellent heat resistance and are stable with respect to the pressure cooker test, thereby enabling them to be in film form and hot melt coated while also having excellent adhesive strength.

## Claims

1. A hot melt adhesive composition comprising:
(a) a thermoplastic resin comprising a polyolefin having an epoxy group in its molecule; and
(b) an aromatic amine represented by the formula 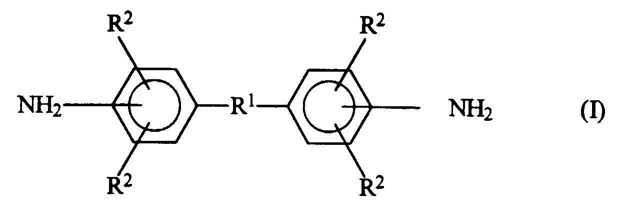 wherein, R¹ is -C(R)₂, -SO₂-, or a bivalent fluorene group having the formula 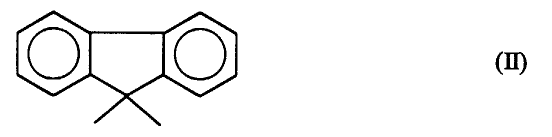 wherein, each R may be the same or may be different, and is independently selected from the group consisting of hydrogen, alkyl groups having 1-3 carbon atoms, halogen-substituted alkyl groups having 1-3 carbon atoms, and cyclohexyl groups; and each R² may be the same or may be different, and is independently selected from the group consisting hydrogen, halogen, and alkyl groups having 1-3 carbon atoms.

2. A hot melt adhesive composition as set forth in claim 1 wherein the thermoplastic resin has a melt flow rate of 1-500 g/10 minutes when measured at a temperature of 190°C in accordance with JIS K6760.

3. A hot melt adhesive composition as set forth in claim 1, wherein the aromatic amine is used within a range of 0.5-100 parts by weight per 100 parts by weight of the thermoplastic resin.

4. A hot melt adhesive composition as set forth in any of claims 1 through 3 wherein the polyolefin of the thermoplastic resin is a copolymer of at least glycidyl(meth)acrylate and ethylene.

5. A hot melt adhesive composition as set forth in any of claims 1 or 2 which further comprises epoxy resin.

6. A hot melt adhesive composition as set forth in claim 3 which further comprises epoxy resin.

7. A hot melt adhesive composition as set forth in claim 6 wherein the epoxy resin is contained as a reaction product thereof with the aromatic amine.

8. An adhesive film which comprises a support having deposited thereon an adhesive layer that is formed from the hot melt adhesive composition of claim 1.

## Patentansprüche

1. Schmelzklebemasse, umfassend:
(a) ein thermoplastisches Harz, umfassend ein Polyolefin mit einer Epoxygruppe in seinem Molekül und
(b) ein aromatisches Amin der nachstehenden Formel (I) 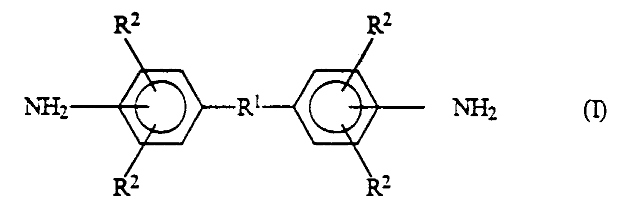 worin R¹ -C(R)₂,-SO₂- oder ein zweiwertiger Fluorenrest der nachstehenden Formel (II) 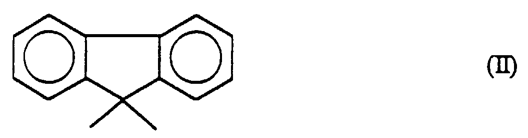 ist, worin R jeweils gleich oder verschieden sein kann und unabhängig aus der Gruppe ausgewählt ist, die aus einem Wasserstoffatom, Alkylresten mit 1 bis 3 Kohlenstoffatomen, halogensubstituierten Alkylresten mit 1 bis 3 Kohlenstoffatomen und Cyclohexylresten besteht, und R² jeweils gleich oder verschieden sein kann und unabhängig aus der Gruppe ausgewählt ist, die aus einem Wasserstoff-, Halogenatom und Alkylresten mit 1 bis 3 Kohlenstoffatomen besteht.

2. Schmelzklebemasse nach Anspruch 1, wobei das thermoplastische Harz eine, bei einer Temperatur von 190°C gemäß JIS K6760 gemessene, Schmelzfließrate von 1 bis 500 g/10 Minuten hat.

3. Schmelzklebemasse nach Anspruch 1, wobei das aromatische Amin in einem Bereich von 0.5 bis 100 Gew.-Teilen pro 100 Gew.-Teile des thermoplastischen Harzes verwendet wird.

4. Schmelzklebemasse nach einem der Ansprüche 1 bis 3, wobei das Polyolefin des thermoplastischen Harzes ein Copolymer von zumindest Glycidyl(meth)acrylat und Ethylen ist.

5. Schmelzklebemasse nach einem der Ansprüche 1 oder 2, die außerdem ein Epoxyharz umfaßt.

6. Schmelzklebemasse nach Anspruch 3, die außerdem ein Epoxyharz umfaßt.

7. Schmelzklebemasse nach Anspruch 6, wobei das Epoxyharz als sein Reaktionsprodukt mit einem aromatischen Amin enthalten ist.

8. Klebefilm, umfassend einen Träger mit einer darauf aufgetragenen Klebemittelschicht, die aus einer Schmelzklebemasse nach Anspruch 1 gebildet wird.

## Revendications

1. Composition d'adhésif thermofusible comprenant:
(a) une résine thermoplastique comprenant une polyoléfine possédant un groupe époxy dans sa molécule; et
(b) une amine aromatique représentée par la formule 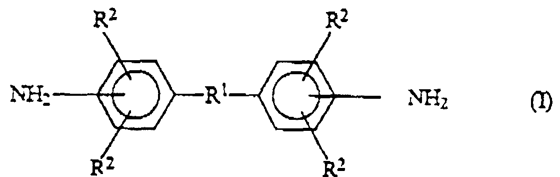 dans laquelle R¹ est -C(R)₂, -SO₂- ou un groupe fluorène bivalent de formule 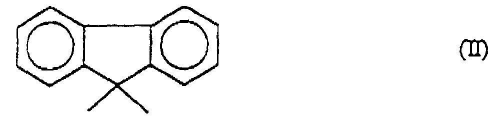 dans laquelle chaque R peut être identique ou différent de l'autre et est choisi indépendamment dans le groupe constitué par un atome d'hydrogène et les groupes alkyle comportant 1-3 atomes de carbone, les groupes alkyle halogéno-substitués comportant 1-3 atomes de carbone et les groupes cyclohexyle; et chaque R² peut être identique ou différent des autres et est choisi indépendamment dans le groupe constitué par un atome d'hydrogène, un atome d'halogène et les groupes alkyle comportant 1-3 atomes de carbone.

2. Composition d'adhésif thermofusible selon la revendication 1, dans laquelle la résine thermoplastique possède un indice de fluidité à chaud de 1-500 g/10 minutes, mesuré à une température de 190°C selon JIS K6760.

3. Composition d'adhésif thermofusible selon la revendication 1, dans laquelle l'amine aromatique est utilisée dans une gamme de 0,5 à 100 parties en poids pour 100 parties en poids de la résine thermoplastique.

4. Composition d'adhésif thermofusible selon l'une quelconque des revendications 1 à 3, dans laquelle la polyoléfine de la résine thermoplastique est un copolymère d'au moins le (méth)acrylate de glycidyle et l'éthylène.

5. Composition d'adhésif thermofusible selon l'une quelconque des revendications 1 ou 2, qui comprend par ailleurs une résine époxy.

6. Composition d'adhésif thermofusible selon la revendication 3, qui comprend par ailleurs une résine époxy.

7. Composition d'adhésif thermofusible selon la revendication 6, dans laquelle la résine époxy est contenue en tant qu'un de ses produits de réaction avec l'amine aromatique.

8. Film adhésif qui comprend un support sur lequel est déposée une couche d'adhésif formée de la composition d'adhésif thermofusible de la revendication 1.
